(19) **Europäisches Patentamt / European Patent Office / Office européen des brevets**

(11) **EP 1 750 192 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
*G05D 19/02* (2006.01)    *F16F 15/00* (2006.01)

(21) Anmeldenummer: **05017138.8**

(22) Anmeldetag: **05.08.2005**

(54) **Steuerung eines aktiven Schwingungsisolationssystems**

Control of an active system for vibration isolation

Contrôle d'un système actif pour l'isolation de vibrations

(84) Benannte Vertragsstaaten:
**CH DE FR GB LI NL**

(43) Veröffentlichungstag der Anmeldung:
**07.02.2007 Patentblatt 2007/06**

(73) Patentinhaber: **Integrated Dynamics Engineering GmbH
65479 Raunheim (DE)**

(72) Erfinder:
• **Heiland, Peter
65479 Raunheim (DE)**
• **Kropp, Peter A., Dr.
55130 Mainz (DE)**

(74) Vertreter: **Blumbach - Zinngrebe
Patentanwälte
Alexandrastrasse 5
65187 Wiesbaden (DE)**

(56) Entgegenhaltungen:
EP-A- 1 197 824    US-A- 4 999 534
US-A- 5 638 304    US-A1- 2001 035 068

• YUAN L ET AL: "DISTRIBUTED ARITHMETIC IMPLEMENTATION OF MULTIVARIABLE CONTROLLERS FOR SMART STRUCTURAL SYSTEMS" SMART MATERIALS AND STRUCTURES, IOP PUBLISHING LTD., BRISTOL, GB, Bd. 9, Nr. 4, August 2000 (2000-08), Seiten 402-412, XP008059444 ISSN: 0964-1726
• DITZEN C ET AL: "A parameterizable biquad clock for IIR filters in ASICs: implementations and motivations" IEEE CONFERENCE PROCEEDINGS, 17. September 1990 (1990-09-17), Seiten P7-41, XP010093164
• YONGQING FU ET AL: "A marine engine torsion vibration measuring method and its implementation based on FPGA" IEEE CANADIAN CONFERENCE ON ELECTRICAL AND COMPUTER ENGINEERING. CCECE 2002. WINNIPEG, MANITOBA, CANADA, MAY 12 - 15, 2002, CANADIAN CONFERENCE ON ELECTRICAL AND COMPUTER ENGINEERING, NEW YORK, NY : IEEE, US, Bd. VOL. 1 OF 3, 12. Mai 2002 (2002-05-12), Seiten 488-493, XP010707588 ISBN: 0-7803-7514-9
• TUCK B: "CHOOSING FPGAS, ASICS, OR CORES FOR DSP-BASED SYSTEM DESIGN" COMPUTER DESIGN, PENNWELL PUBL. LITTLETON, MASSACHUSETTS, US, Bd. 35, Nr. 2, Februar 1996 (1996-02), Seiten 85-86,88,92,9, XP000555484 ISSN: 0010-4566

**Beschreibung**

Die Erfindung bezieht sich auf eine Steuerung eines aktiven Schwingungsisolationssystems, umfassend eine Anzahl von Schwingungssignalgebern zur Lieferung von analogen Sensorsignalen, eine Anzahl von Aktoren zur Schwingungsunterdrückung und eine Steuereinheit zur Verarbeitung der Sensorsignale in Aktor-Stellsignale.

Derartige Steuerungen sind in Form einer Regelschleife aufgebaut (EP-A 0 621 418, US-A 5 423 523, US-A 5 734 246, US 5638304), wobei die Steuereinheit entweder auf der analogen oder auf der digitalen Ebene arbeitet. Vorteil der Signalverarbeitung auf analoger Ebene ist die erzielbare raschere Reaktionszeit auf Störungen hin, die auf das Schwingungsisolationssystem einwirken, und zwar im Vergleich zur Signalverarbeitung in einer digitalen Steuereinheit. Dies wird einmal durch die doppelte Umwandlung analog-digital sowie digital-analog und zum anderen durch die Abtastrate und die Rechenzeit innerhalb der Abtastrate bedingt, was zu einer zusätzlichen Signallaufzeit führt. Die Abtastrate kann nur in dem Maß erhöht werden, wie innerhalb einer Abtastperiode alle Regelungsalgorithmen abgearbeitet werden können. In der Praxis bestimmt daher die Komplexität des Regelungsalgorithmus zusammen mit der Rechenleistung des digitalen Signalprozessors (DSP) die maximal mögliche Abtastrate und damit die kürzest mögliche Signallaufzeit.

Gegenüber analog arbeitenden Steuereinheiten hat eine digital arbeitende Steuereinheit wiederum bedeutende Vorteile hinsichtlich guter Konfigurierbarkeit, Steuerungsmöglichkeiten mittels PC-Computer und Anpassungsmöglichkeit an sich ändernde Systembedingungen.

Der Erfindung liegt deshalb die Aufgabe zugrunde, eine Steuerung eines aktiven Schwingungsisolationssystems unter Verwendung einer Steuereinheit zu schaffen, die auf digitaler Ebene arbeitet, bei der jedoch die zusätzliche Signallaufzeit moderat bleibt.

Die gestellte Aufgabe wird aufgrund der Lehre des Anspruches 1 gelöst und durch die in abhängigen Ansprüchen gekennzeichneten Maßnahmen ausgestaltet und weiterentwickelt.

Im einzelnen wird ein aus "Field Programmable Gate-Arrays" aufgebautes FPGA-System als Steuereinheit verwendet, der ein Analog-Digital-Wandler vorgeschaltet und ein Digital-Analog-Wandler nachgeschaltet sind. (Im Hinblick auf das Gesamtsystem stellt das FPGA-System ein Untersystem dar). Das FPGA-System enthält eingangsseitig eine Sensorsteuermatrix, die aus den Sensorsignalen den sechs Freiheitsgraden zugeordnete Achsensignale bildet. Die Achsensignale werden jeweils in Regelungskaskaden weiterverarbeitet, um Achsen-Ausgangssignale zu liefern. In einer Ausgangssteuer-Berechnungsschaltung werden Aktor-Stellsignale von den Achsen-Ausgangssignalen gewonnen. Die zunächst digital vorliegenden Aktor-Stellsignale werden durch einen ausgangsseitigen Digital-Analog-Wandler in analoge Aktor-Stellsignale umgewandelt.

Zur Optimierung der Betriebsweise des FPGA-Untersystems ist es zweckmäßig, dem FPGA-System einen Sensor-Puffer eingangsseitig vorzuschalten und ausgangsseitig einen Aktor-Puffer nachzuschalten. Auf diese Weise können hohe Abtastraten des FPGA-Systems unabhängig von Taktraten von vor- oder nachgeschalteten Stufen der Steuerung verwendet werden. In diesem Zusammenhang kann es von Vorteil sein, zwischen dem Digital-Analog-Wandler und dem Sensor-Puffer einen eingangsseitigen FPGA-Baustein und zwischen Aktor-Puffer und Digital-Analog-Wandler einen ausgangsseitigen FPGA-Baustein einzufügen.

Im Allgemeinen gibt es sechs Freiheitsgrade zu beachten, das heißt es sind sechs Achsensignale zu berechnen, und die Sensorsteuermatrix multipliziert zu diesem Zweck 6 Sensorwerte mit einer 6x6-Matrix. Die so erzeugten Achsensignale müssen im Allgemeinen durch Filterung noch weiter verarbeitet werden, um Stellsignale am Aktor zu erzeugen. Es sind deshalb sechs unabhängige Regelungskaskaden für die sechs Achsensignale vorgesehen. Die Regelungskaskaden enthalten vorzugsweise jeweils fünf Biquad-Filter in jeder Reihe. Damit können Hoch- oder Tiefpass- oder sonstige Filtereigenschaften verwirklicht werden.

Als eine solche andere Steuervorrichtung kommt vor allem ein digitaler Signalprozessor DSP in Betracht, wie er ähnlich bereits in bekannten Regelungen von aktiven Schwingungsisolationssystemen verwendet wird. Diese digitalen Signalprozessoren DSP können nicht mit der hohen Abtastrate des FPGA-Systems betrieben werden.

Die DSP-Steuervorrichtung ist zweckmäßigerweise sowohl an dem Sensor-Puffer als auch an dem Aktor-Puffer angeschlossen, um auf das Regelsystem zugreifen zu können. Die Abtastrate der DSP-Steuervorrichtung wird niedriger sein als die bei dem FPGA-System anzutreffende Taktung. Dies eröffnet die Möglichkeit, Regelungen mit hoher Anforderung an möglichst niedrigem Phasenverlust auf dem FPGA-System laufen zu lassen, andere Regelungen aber auf der DSP-Steuervorrichtung rechnen zu lassen. Wegen der Verbindung mit dem Aktor-Puffer kann eine Signalsummation in diesem Aktor-Puffer erfolgen, wobei es nicht darauf ankommt, wie schnell die Daten von Seiten der DSP-Steuervorrichtung eintreffen. Insbesondere wird die Regelstrecke des FPGA-Untersystems nicht durch die zusätzlichen Daten der DSP-Steuervorrichtung beeinträchtigt.

Der digitale Signalprozessor DSP oder ein weiterer solcher digitaler Signalprozessor DSP kann außerdem an mindestens einem der Biquad-Filter angeschlossen sein, um dessen Koeffizienten gegebenenfalls ändern zu können. Auf diese Weise kann das Schwingungsisolationssystem sich wechselnden Grundbedingungen rasch anpassen.

Jede Regelungskaskade kann mehrere Biquad-Filter aufweisen, wobei es zweckmäßig ist, jedem Biquad-Filter ein Ausgangspuffer zuzuordnen, aus dem sich ein nachfolgendes Biquad-Filter bedienen kann. Gleichzeitig kann auch ein weiterer Signalprozessor DSP zu Diagnosezwecken angeschlossen sein.

Im Falle dass der digitale Signalprozessor mit dem Aktor-Puffer verbunden ist, kann er auch zusätzliche digitale Aktor-Stellsignale beisteuern. In dem Zusammenhang ist es möglich, im Aktor-Puffer mehr als sechs digitale Aktor-Stellsignale bereitzustellen, wenn dies zur Steuerung des aktiven Schwingungsisolationssystems zweckmäßig oder erforderlich ist.

Ausführungsbeispiele der Erfindung werden anhand der Zeichnung beschrieben. Dabei zeigt:

Fig. 1    eine Grundform der Steuerung eines aktiven Schwingungsisolationssystems,
Fig. 2    eine erweiterte Ausführungsform der Steuerung des aktiven Schwingungsisolationssystems,
Fig. 3    eine Einzelheit des Schaltschemas der Fig. 2,
Fig. 4    eine schematische Darstellung einer Regelungskaskade als Teil der Schaltung nach Fig. 1 oder 2,
Fig. 5    eine Einzelheit einer möglichen Zusatzschaltung zu Fig. 4, und
Fig. 6    eine Ausführungsform zu einer Teilschaltung der Fig. 2.

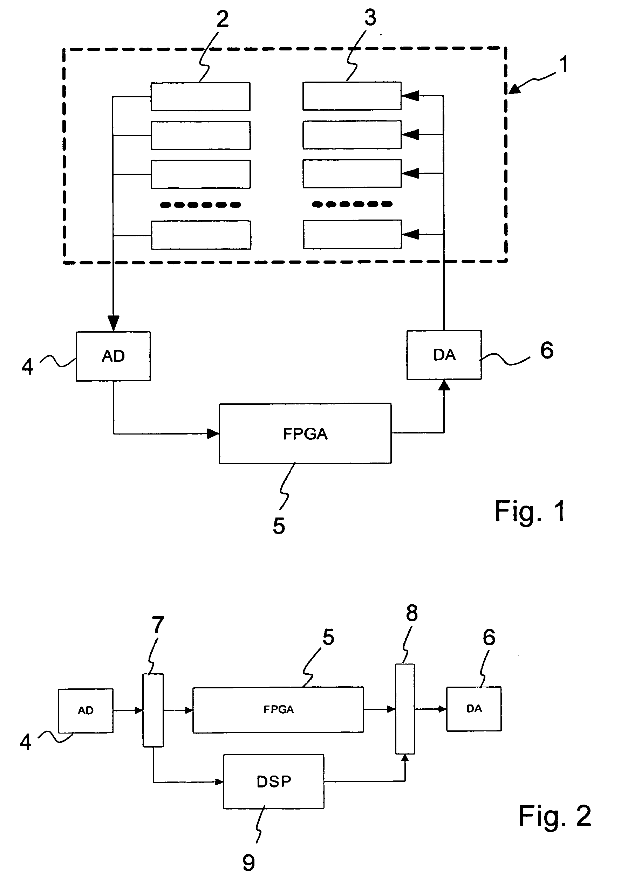

Fig. 1 stellt das Grundschema der Steuerung eines aktiven Schwingungsisolationssystems 1 dar. Dieses Schwingungsisolationssystem stützt eine zu isolierende Masse gegenüber einer Standfläche und umfasst einen Satz von passiven Isolationselementen (Feder/Dämpfer-Kombinationen aus Gummi, Luftfedern, Stahlfedern und dergleichen) und von aktiven Elementen, die beispielsweise im Gegentakt zu der Schwingungsanregung der Masse gesteuert

werden, um die Masse beispielsweise gegen Bodenvibrationen zu isolieren. Derartige aktive Schwingungsisolationssysteme sind bekannt und werden deshalb hier nicht näher dargestellt. Im einzelnen enthalten diese aktiven Schwingungsisolationssysteme eine Anzahl von Schwingungssignalgeber oder Sensoren 2 zur Lieferung von analogen Sensorsignalen und eine Anzahl von Aktoren 3 zur Schwingungsunterdrückung der Masse. Die Schwingungssignalgeber oder Sensoren 2 sind in bestimmter, für den Anwendungszweck angepasster Weise um die zu isolierende Masse angeordnet, auch hinsichtlich ihrer Richtungsempfindlichkeit. Die Aktoren 3 sind ebenfalls in geeigneter Weise zu der Masse angeordnet, um diese zu stützen und die Schwingung der Masse gegenüber der Umgebung zu isolieren oder solchen Schwingungen entgegenzuwirken.

Die Sensoren 2 und die Aktoren 3 sind über einen Regler verbunden, der als Steuereinheit ein FPGA-Untersystem 5 aus frei programmierbaren Gate-Arrays enthält. Das FPGA-Untersystem arbeitet rein digital, weswegen ihm eingangsseitig ein Analog-Digital-Wandler 4 zur Umwandlung der analogen Sensorsignale in digitale Sensorsignale und ausgangsseitig ein Digital-Analog-Wandler zur Umwandlung der digitalen in analoge Aktor-Steuersignale zugeschaltet sind. Die Komponenten 2, 4, 5, 6, 3 bilden so eine Rückkopplungsschleife des Reglers.

FPGAs sind programmierbare Speicherbausteine, die eine Matrix aus Berechnungselementen besitzen und deren Funktionalität durch Konfigurationsbits bestimmt wird. Diese Berechnungselemente, auch als Logikblöcke bezeichnet, sind über eine Vielzahl von Verdrahtungkanälen miteinander verknüpft. Außerdem sind alle internen Ressourcen von programmierbaren I/O-Blocks umgeben. Damit können spezifische Schaltungen in FPGA implementiert werden, deren logische Funktionen in den Logikblöcken abgebildet sind und deren Ergebnisse miteinander verknüpft die gesamte Schaltung realisieren.

Fig. 2 zeigt eine Erweiterung des Schemas der Fig. 1 unter Fortlassung der Sensoren 2 und der Aktoren 3. Zwischen Analog-Digital-Wandler 4 und dem Eingang des FPGA-Untersystems ist ein Sensor-Puffer 7 geschaltet und zwischen dem Ausgang des FPGA-Untersystems und dem Digital-Analog-Wandler 6 ein Aktor-Puffer 8 geschaltet. Parallel zu dem FPGA-Untersystem ist ein digitaler Signalprozessor DSP 9 angeordnet.

Digitale Signalprozessoren sind Mikroprozessoren, die auf die Aufgaben im Bereich der digitalen Signalverarbeitung zugeschnitten sind. Der Code für DSPs umfasst viele arithmetische Operationen, vor allem Multiplikationen und Additionen. Es kommen wenige Verzweigungen vor, wenn doch, dann mit sehr gut vorhersagbaren Sprungzielen. DSPs weisen eine hohe Nebenläufigkeit auf und verarbeiten dabei sehr große Datenmengen. Die Programmiersprache C ist auch bei DSPs zum Standard geworden, jedoch sind zeitkritische Teilprogramme in Assembler zu programmieren. Weil in den meisten signalverarbeitenden System komplexe mathematische Operationen auf zeitkritische Signale (Echtzeit) angewandt werden, besitzen DSPs angepasste Architekturen, um sich wiederholende, numerisch aufwendige Berechnungen zu beschleunigen.

Bei dieser Anordnung der Systeme nach Fig. 2 wird das FPGA-Untersystem zur Bildung der Steuersignale für die Schwingungsisolation eingesetzt, während andere Regelungen von dem DSP-System bewältigt werden. Dieses kann über den Sensor-Puffer 7 und den Aktor-Puffer 8 auf die Daten des Regelsystems zugreifen, ist aber bei der Wahl der Abtastrate nicht von der Taktung des FPGA-Untersystems abhängig. Regelungen mit hoher Anforderung an möglichst geringem Phasenverlust (Regelungsverzögerung) werden auf dem FPGA-Untersystem berechnet, während andere Regelungen, beispielsweise wie sie nach Verschiebung der zu isolierenden Masse des Schwingungsisolationssystems von einer Stelle zu einer anderen Stelle auf einem Maschinenbett oder dergleichen auftreten, von dem DSP-System berechnet werden. Am Aktor-Puffer 8 erfolgt eine Summation der berechneten Werte der beiden Systeme.

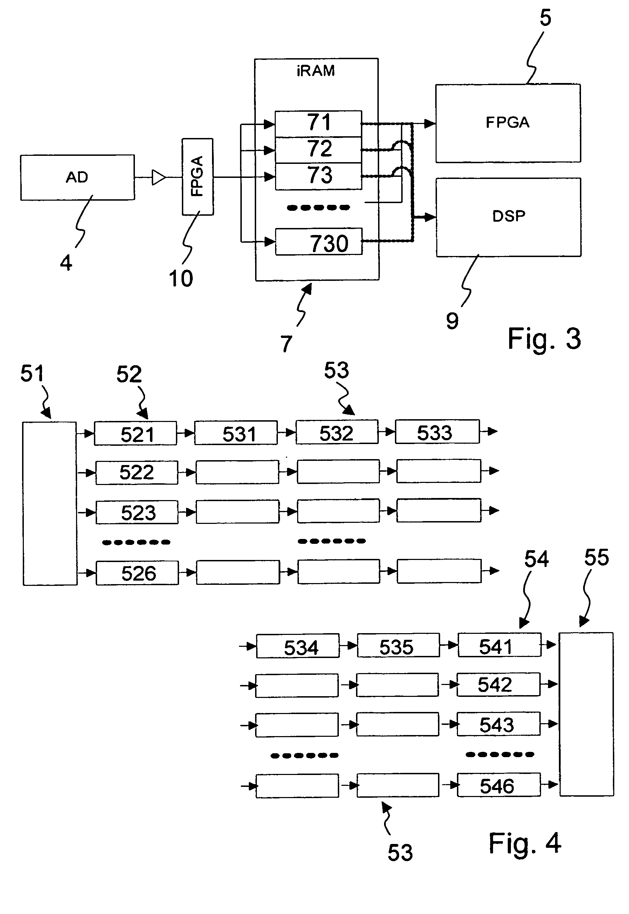

Fig. 3 zeigt die Struktur des Sensor-Puffers 7. Es wird ein RAM-Speicher verwendet mit Bereichen 71, 72, 73, 730 für einzelne Sensoren. Zur Ansteuerung dieser Bereiche wird zweckmäßig ein FPGA-Baustein 10 verwendet. Auf die einzelnen Sensorspeicherbereiche 71, 72, 73, 730 kann sowohl von dem FPGA-Untersystem 5 als auch von dem DSP-System 9 zugegriffen werden. Wie bereits erläutert, erfolgt dies unabhängig voneinander auch mit unterschiedlicher Abtastrate.

Fig. 4 zeigt den inneren Aufbau des FPGA-Untersystems. Es ist eine Sensorsteuermatrix 51, ein Speicherbereich 52 für Achsensignale 521, 522, 523, 524, 525 und 526, ein Regelungskaskadenblock 53, ein Speicherbereich 54 für Achsenausgangssignale 541, 542, 543, 544, 545 und 546 sowie ein Ausgangssignal-Berechnungsblock 55 vorgesehen. Die Sensorsteuermatrix 51 entnimmt die einzelnen Sensorsignale aus den zugeordneten Speicherbereichen des Sensor-Puffers 7 und multipliziert diese mit einer 6x6-Matrix, um zu den Achsensignalen 521 bis 526 für die sechs Freiheitsgrade (i=1..6) zu gelangen.

$$\texttt{Achsensignal[i]} = \sum_{k=1}^{6} Sensorsignal[i][k] \cdot Sensor\ [k] \tag{1}$$

Die Achsensignale werden in dem Regelungskaskadenblock 53 zu Achsen-Ausgangssignalen verarbeitet, und zwar sind für jedes Achsensignal 521 bis 526 je eine Regelungskaskade mit jeweils fünf Biquad-Filtern 531, 532, 533, 534 und 535 vorgesehen, die in Reihe geschaltet sind und IIR-Filter zweiter Ordnung darstellen. In jedem Biquad wird eine feste Berechnungsvorschrift mit Koeffizienten verwirklicht, die über einen nicht dargestellten FPGA-Speicher frei einstellbar sind. Das Ergebnis des ersten Biquads 531 in der Reihe wird dem nächsten Biquad 532 als Eingangssignal zugeführt. Es gibt sechs unabhängige Regelungskaskaden.

Das Biquad ("bi-quadradic") ist ein Zweipol-Nullstellen Filter und besteht aus fünf Koeffizienten. Für dieses Filter gibt es mehrere Implementationen. Die hier vorgestellte Ausführungsform entspricht der sogenannten Direct-Form-I Repräsentation.

Die Übertragungsfunktion eines Biquad ist gegeben durch die folgende Formel:

Übertragungsfunktion eines Biquad-Filters

$$\texttt{H(z)} \simeq \frac{b_0 + b_1\,z^{-1} + b_2\,z^{-2}}{1 + a_1\,z^{-1} + a_2 z^{-2}} \tag{2}$$

Diese lässt sich als Summenformel wie folgt in Software implementieren
(y ist das Ausgangs-Sample, x ist das Eingangs-Sample):
$y(n)=a_1 y(n-1)+a_2 y(n-2)+b_0 x(n)+b_1 x(n-1)+b_2 x(n-2)$ (3)

Diese Summenformel lässt sich wie folgt umschreiben, wobei die Biquad-Berechnung auf Eingangs-Sample x[], akkumulierte Ergebnisse d[] und Koeffizienten b und a beruht.

$$\texttt{d[n]=x-}a_1\texttt{d[n-1]-}a_2\texttt{d[n-2]} \tag{4}$$
$$\texttt{y=}b_2\texttt{d\ [n-2]+}b_1\texttt{d[n-1]+}b_0\texttt{d[n]}$$

Es wird das momentane Eingangs-Sample x zusammen mit den akkumulierten Ergebnissen d[], den Koeffizienten a und b verwendet, um das Ausgangs-Sample y zu berechnen.

Für jedes Biquad muss ein Array mit drei Werten d[] gehalten werden, zusammen mit den Koeffizienten des Filters a, b. Zusätzlich muss das Ausgangs-Sample y gehalten werden, weil es den Eingang für das nächste Biquad in einer Reihe darstellt.

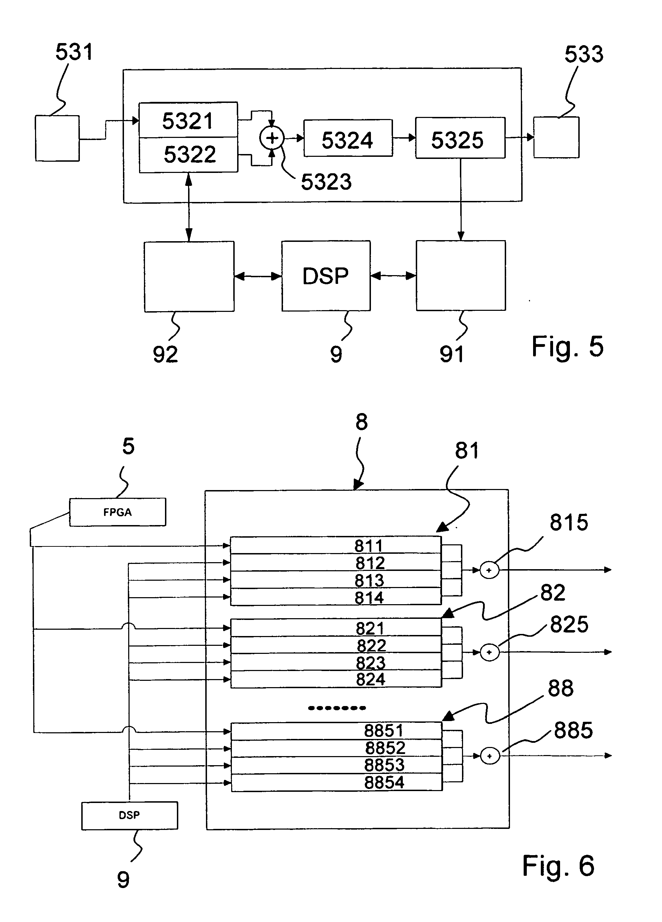

Fig. 5 zeigt eine schematische Übersicht über ein Biquad 532 und den Datenzugriff durch ein DSP-System 9. Ein solches Biquad ist an einen Berechnungsvorläufer angeschlossen, der hier als das Biquad 531 angenommen ist. Ausgangsseitig ist an das Biquad 532 ein Berechnungsnachfolger angeschlossen, hier das Biquad 533. Eingangsseitig enthält das Biquad 532 eine Eingangs-Sample-Stufe 5321 für Eingangs-Samples x und eine Erregungs-Sample-Stufe 5322 für Erregungssignale n. Die Stufe 5322 bildet einen Summationseingang und stellt ein zusätzliches Input-Bin für das jeweilige Biquad dar und ermöglicht es, Diagnosesignale, z. B. Rauschen oder Sinus, in das Biquad einzuspeisen. Das Eingangs-Sample x für jedes Biquad setzt sich also zusammen aus dem anliegenden Input-Sample und einem optionalen zusätzlichen Diagnose-Sample. In der Darstellung der Fig. 4 wird das Diagnose-Sample von dem DSP-System 9 zur Verfügung gestellt, es ist aber auch möglich, dass das Diagnose-Sample ein vom FPGA-System selbst erzeugtes Rausch-/Sinus-Signal-Sample ist.

Die Stufen 5321 und 5322 werden in einer Summierstufe 5323 summiert und der Biquad-Berechnungsstufe 5324 zugeführt. Die Ausgangs-Sample der Stufe 5325 enthält das Ausgangs-Sample y, das der nachfolgenden Berechnungsstufe 533 zugeführt wird und auch von dem DSP-System 9 in eine Diagnosestufe 91 ausgelesen werden kann. Das DSP-System 9 wertet das Diagnosesignal aus.

Zu Diagnosezwecken können somit mittels des DSP-Systems 9 gezielte Signale in der Summationsstufe 5322 eingespeist werden, um innerhalb des FPGA-Systems in Stufe 5323 zusammen mit dem Inhalt der Stufe 5321 der Berechnung in der Stufe 5324 zugeführt zu werden. Das Ergebnis ist das Signal Y in der Stufe 5325, das abgegriffen und dem DSP-System zugeführt wird. Auf diese Weise kann die Übertragungscharakteristik des Biquad-Filters durchgemessen werden, indem ein Rauschen-Signal bei 5322 eingespeist und an 5325 des Spektrums des Y-Signals überprüft wird. Die Übertragungsfunktion zwischen der Ausgangsstufe 5325 und der Eingangsstufe 5322 stellt die Übertragungsfunktion des Biquad-Filters dar.

Die Übertragungsfunktion des Schwingungsisolationssystems kann mit dem DSP-System 9 wie folgt ermittelt werden: Ein Rauschen-Signal wird in den Ausgangspuffer 55 geschrieben [A]. An der Sensorsteuermatrix 51 wird ein Signal [B] abgegriffen. Die Übertragungsfunktion des angeschlossenen Schwingungsisolationssystems wird durch [B] [A] charakterisiert.

Das DSP-System hat außerdem Lese- und Schreibzugriff zu den Koeffizienten a1, a2, b0, b1 und b2 eines jeden Biquad-Filters. Dadurch können die Eigenschaften der Filterkaskade durch das DSP-System 9 geändert werden.

Zurückkommend auf Fig. 4 ist dort ein Ausgangssignal-Berechnungsblock 55 gezeigt, der zur Berechnung von Aktor-Stellsignalen dient. Hierzu werden die Achsen-Ausgangssignale aus dem Speicherbereich 54, die einen Vektor mit sechs Werten darstellen, in eine Mehrzahl von wenigstens sechs individuelle Aktorsignale umgerechnet. Hier wird eine Matrix von 8x6 benutzt, so dass acht Aktor-Stellsignale erzeugt werden.

Berechnung von Achsen-Ausgangssignalen zum Aktor-Stellsignalen (i=1..8).

$$\text{Aktor-Stellsignal}[i] \; = \; \sum_{k=1}^{6} Matrix[i][k] \cdot Achsenausgangssignal\,[k] \qquad (5)$$

Fig. 6 zeigt eine schematische Struktur des Aktor-Puffers 8 für eine Anordnung nach Fig. 2. Es gibt acht Sparten 81 bis 88, für jeden Aktor jeweils eine Sparte. Jede Sparte enthält jeweils vier Zeilen, die für die Sparte 81 mit 811, 812, 813 und 814 angegeben sind. Die Zeile 811 enthält das Aktor-Stellsignal des FPGA-Systems, während die Zeilen 812, 813 und 814 Beiträge des oder der DSP-Systeme enthalten. Die Sparten 82 bis 88 sind wie die Sparte 81, jedoch für jeweils einen anderen Aktor aufgebaut. Jeder Sparte ist ein Summierer 815, 825..885 nachgeschaltet, um die Beiträge aus den unterschiedlichen Zeilen des Aktorpuffers aufzusummieren und um zu dem eigentlichen Aktor-Stellsignal zu gelangen.

Die neue Steuerung eines aktiven Schwingungsisolationssystems enthält einen Regler, dessen Herzstück ein FPGA-System darstellt. Dieser FPGA-Regler berechnet Achsensignale in sechs Freiheitsgraden. Der Regler hat den großen Vorteil, dass er rein digital arbeitet, ohne jedoch den Nachteil eines zu großen Phasenverlustes der Regelungsstrecke in Kauf nehmen zu müssen. Es werden die Vorteile einer guten Konfigurierbarkeit und der Steuerungsmöglichkeit mittels PC-Computer erhalten.

**Patentansprüche**

1.  Steuerung eines aktiven Schwingungsisolationssystems umfassend:

> eine Anzahl von Schwingungssignalgeber (2) zur Lieferung von analogen Sensorsignalen,
> eine Anzahl von Aktoren (3) zur Schwingungsunterdrückung,
> eine Steuereinheit zur Verarbeitung der Sensorsignale in Aktor-Stellsignale,
> ein der Steuereinheit vorgeschalteter Analog-Digital-Wandler (4) zur Verwandlung der analogen in digitale Sensorsignale, und
> ein der Steuereinheit nachgeschalteter Digital-Analog-Wandler (6) zur Umwandlung der digitalen in analoge Aktor-Stellsignale,

**gekennzeichnet durch** folgende Merkmale:

ein FPGA-System (5) als Steuereinheit, das aus frei programmierbaren Gate-Arrays aufgebaut ist und umfasst:

a) eine Sensorsteuermatrix (51), welche Achsensignale in gewünschten Freiheitsgraden berechnet, und zwar mittels der digitalen Sensorsignale in Abhängigkeit von der räumlichen Anordnung der Schwingungssignalgeber (2) und ihrer Richtungsempfindlichkeit,

b) ein Regelungskaskadenblock (53) für die Achsensignale, enthaltend mehrere Biquad-Filter (531, 532, 533, 534, 535) in je einer Reihe pro Freiheitsgrad, die jeweils eine Berechnungsvorschrift mit frei einstellbaren Koeffizienten darstellen, um Achsen-Ausgangssignale zu liefern, und

c) ein Ausgangssignal-Berechnungsblock (55) zur Berechnung von digitalen Aktor-Stellsignalen, ausgehend von den Achsen-Ausgangssignalen.

2. Steuerung eines aktiven Schwingungsisolationssystems nach Anspruch 1,
**dadurch gekennzeichnet,**
**dass** zwischen Analog-Digital-Wandler (4) und FPGA-System (5) ein Sensor-Puffer (7) zur Bereitstellung der digitalen Sensorsignale und zwischen FPGA-System (5) und Digital-Analog-Wandler (6) ein Aktor-Puffer (8) zur Bereitstellung der digitalen Aktor-Stellsignale angeordnet sind.

3. Steuerung eines aktiven Schwingungsisolationssystems nach Anspruch 2,
**dadurch gekennzeichnet,**
**dass** zwischen Analog-Digital-Wandler (4) und Sensor-Puffer (7) ein eingangsseitiger FPGA-Baustein (10) und zwischen Digital-Analog-Wandler (6) und Aktor-Puffer (8) ein ausgangsseitiger FPGA-Baustein eingefügt sind.

4. Steuerung eines aktiven Schwingungsisolationssystems nach einem der Ansprüche 1 bis 3,
**dadurch gekennzeichnet,**
**dass** die Sensorsteuermatrix (7) sechs Sensorwerte mit einer 6x6 Matrix multipliziert.

5. Steuerung eines aktiven Schwingungsisolationssystems nach Anspruch 4,
**dadurch gekennzeichnet,**
**dass** der Regelungskaskadenblock (53) sechs unabhängige Regelungskaskaden mit jeweils fünf Biquad-Filtern (531 bis 535) in jeder Reihe enthält.

6. Steuerung eines aktiven Schwingungsisolationssystems nach einem der Ansprüche 1 bis 5,
**dadurch gekennzeichnet,**
**dass** ein digitaler Signalprozessor (9) parallel zu dem FPGA-System (5) angeschlossen ist,
um Regelungen mit niedrigen Anforderungen an Phasenverlust zu berechnen und in die Steuerung einzugeben.

7. Steuerung eines aktiven Schwingungsisolationssystems nach einem der Ansprüche 1 bis 6,
**dadurch gekennzeichnet,**
**dass** der oder ein weiterer digitaler Signalprozessor (9) an mindestens einem Biquad-Filter (532) angeschlossen ist, um Koeffizienten des Biquad-Filters einzustellen oder zu ändern.

8. Steuerung eines aktiven Schwingungsisolationssystems nach einem der Ansprüche 1 bis 7,
**dadurch gekennzeichnet,**
**dass** jedes Biquad-Filter (531 bis 535) einen Ausgangspuffer (5325) aufweist, um einen nachfolgenden Biquad-Filter oder einen digitalen Diagnose-Signalprozessor (9) zu beliefern.

9. Steuerung eines aktiven Schwingungsisolationssystems nach einem der Ansprüche 6 bis 8,
**dadurch gekennzeichnet,**
**dass** der digitale Signalprozessor (9) zur Ermittlung der Übertragungsfunktion von Teilen der Steuerung oder des Schwingungsisolationssystems an die Signalverarbeitungskette des Systems angeschlossen ist.

10. Steuerung eines aktiven Schwingungsisolationssystems nach Anspruch 9,
**dadurch gekennzeichnet,**
**dass** im Aktor-Puffer (8) mehr als sechs digitale Aktor-Stellsignale bereitgestellt werden.

**Claims**

1. Control of an active vibration isolation system, comprising:

   a number of vibration signal transducers (2) for providing analogue sensor signals,
   a number of actuators (3) for suppressing vibration,
   a control unit for processing the sensor signals to produce actuator control signals,
   an analogue-digital converter (4), connected upstream of the control unit, for converting the analogue sensor signals into digital sensor signals, and
   a digital-analogue converter (6), connected downstream of the control unit, for converting the digital actuator control signals into analogue actuator control signals, **characterised by** the following features:

   an FPGA system (5) as a control unit which is made up of freely programmable gate arrays and comprise:

   a) a sensor control matrix (51) which calculates axis signals in required degrees of freedom, and moreover by means of the digital sensor signals in dependence upon the spatial arrangement of the vibration signal transducers (2) and their directional sensitivity,
   b) a control cascade block (53) for the axis signals, containing several biquad filters (531, 532, 533, 534, 535) in each case in one row per degree of freedom, which each constitute a calculation rule with freely adjustable coefficients in order to provide axis output signals, and
   c) an output signal calculation block (55) for calculating digital actuator control signals, starting from the axis output signals.

2. Control of an active vibration isolation system as claimed in claim 1, **characterised in that** a sensor buffer (7) for providing the digital sensor signals is disposed between the analogue-digital converter (4) and the FPGA system (5), and an actuator buffer (8) for providing the digital actuator control signals is disposed between the FPGA system (5) and the digital-analogue converter (6).

3. Control of an active vibration isolation system as claimed in claim 2, **characterised in that** an input-side FPGA module (10) is inserted between the analogue-digital converter (4) and the sensor buffer (7), and an output-side FPGA module is inserted between the digital-analogue converter (6) and the actuator buffer (8).

4. Control of an active vibration isolation system as claimed in any one of claims 1 to 3. **characterised in that** the sensor control matrix (7) multiplies six sensor values by a 6 x 6 matrix.

5. Control of an active vibration isolation system as claimed in claim 4, **characterised in that** the control cascade block (53) contains six independent control cascades each with five biquad filters (531 to 535) in each row.

6. Control of an active vibration isolation system as claimed in any one of claims 1 to 5, **characterised in that** a digital signal processor (9) is connected in parallel with the FPGA system (5) in order to calculate controls with low phase loss requirements and to input them into the control.

7. Control of an active vibration isolation system as claimed in any one of claims 1 to 6, **characterised in that** the or a further digital signal processor (9) is connected to at least one biquad filter (532) in order to adjust or change coefficients of the biquad filter.

8. Control of an active vibration isolation system as claimed in any one of claims 1 to 7, **characterised in that** each biquad filter (531 to 535) comprises an output buffer (5325) in order to supply a subsequent biquad filter or a digital diagnostic signal processor (9).

9. Control of an active vibration isolation system as claimed in any one of claims 6 to 8. **characterised in that** the digital signal processor (9) is connected to the signal processing chain of the system for the purpose of determining the transfer function of parts of the control or of the vibration isolation system.

10. Control of an active vibration isolation system as claimed in claim 9, **characterised in that** more than six digital actuator control signals are provided in the actuator buffer (8).

**Revendications**

1. Commande d'un système actif d'isolation de vibrations comprenant :

   un certain nombre de générateurs de signaux de vibration (2) pour la fourniture de signaux analogiques de capteur,
   un certain nombre d'actionneurs (3) pour la suppression des vibrations,
   une unité de commande pour le traitement des signaux de capteur en signaux de réglage d'actionneur,
   un convertisseur analogique-numérique (4) monté en amont de l'unité de commande pour la conversion des signaux analogiques de capteur en signaux numériques de capteur, et
   un convertisseur numérique-analogique (6) monté en aval de l'unité de commande pour la conversion des signaux numériques de réglage d'actionneur en signaux analogiques de réglage d'actionneur,
   **caractérisée par** les caractéristiques suivantes :

   un système FPGA (5) comme unité de commande, qui est conçu à base de réseaux de portes librement programmables et comprend :

   a) une matrice de commande de capteur (51), qui calcule des signaux d'axe dans des degrés de liberté souhaités, et ce au moyen des signaux de capteur numériques en fonction de l'agencement dans l'espace des générateurs de signaux de vibration (2) et de leur sensibilité directionnelle,
   b) un bloc en cascade de réglage (53) pour les signaux d'axe, contenant plusieurs filtres biquad (531, 532, 533, 534, 535) dans respectivement une rangée par degré de liberté, qui représentent à chaque fois une prescription de calcul avec des coefficients réglables librement, afin de fournir des signaux de sortie d'axe, et
   c) un bloc de calcul de signal de sortie (55) pour le calcul de signaux numériques de réglage d'actionneur, à partir des signaux de sortie d'axe.

2. Commande d'un système actif d'isolation de vibrations selon la revendication 1,
   **caractérisée en ce qu'**
   un tampon capteur (7) est disposé entre le convertisseur analogique-numérique (4) et le système FPGA (5) pour la mise à disposition des signaux numériques de capteur et un tampon actionneur (8) est disposé entre le système FPGA (5) et le convertisseur numérique-analogique (6) pour la mise à disposition des signaux numériques de réglage d'actionneur.

3. Commande d'un système actif d'isolation de vibrations selon la revendication 2,
   **caractérisée en ce qu'**
   un module FPGA (10) côté entrée est inséré entre le convertisseur analogique-numérique (4) et le tampon capteur (7) et un module FPGA côté sortie est inséré entre le convertisseur numérique-analogique (6) et le tampon actionneur (8).

4. Commande d'un système actif d'isolation de vibrations selon l'une quelconque des revendications 1 à 3,
   **caractérisée en ce que**
   la matrice de commande de capteur (7) multiplie six valeurs de capteur par une matrice 6 x 6.

5. Commande d'un système actif d'isolation de vibrations selon la revendication 4,
   **caractérisée en ce que**
   le bloc en cascade de réglage (53) contient six cascades de réglage indépendantes comprenant chacune cinq filtres biquad (531 à 535) dans chaque rangée.

6. Commande d'un système actif d'isolation de vibrations selon l'une quelconque des revendications 1 à 5,
   **caractérisée en ce que**
   un processeur de signaux numériques (9) est raccordé parallèlement au système FPGA (5), afin de calculer les réglages avec de faibles exigences en perte de phase et les entrer dans la commande.

7. Commande d'un système actif d'isolation de vibrations selon l'une quelconque des revendications 1 à 6,
   **caractérisée en ce que**
   le ou un autre processeur de signaux numériques (9) est raccordé à au moins un filtre biquad (532), afin de régler ou de modifier des coefficients du filtre biquad.

8. Commande d'un système actif d'isolation de vibrations selon l'une quelconque des revendications 1 à 7, **caractérisée en ce que**
   chaque filtre biquad (531 à 535) présente un tampon de sortie (5325), afin de livrer un filtre biquad consécutif ou un processeur de signaux numériques de diagnostic (9).

9. Commande d'un système actif d'isolation de vibrations selon l'une quelconque des revendications 6 à 8, **caractérisée en ce que**
   le processeur de signaux numériques (9) est raccordé à la chaîne de traitement de signal du système pour déterminer la fonction de transmission de parties de la commande ou du système d'isolation de vibrations.

10. Commande d'un système actif d'isolation de vibrations selon la revendication 9, **caractérisée en ce que**
    plus de six signaux numériques de réglage d'actionneur sont mis à disposition dans le tampon actionneur (8).

Fig. 1

Fig. 2

Fig. 3

Fig. 4

531    533
5321
5322
5323    5324    5325

DSP

92    9    91    Fig. 5

8    81
5    FPGA    815
811
812
813
814
82
825
821
822
823
824
88
885
8851
8852
8853
8854
DSP

9    Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0621418 A
- US 5423523 A
- US 5734246 A
- US 5638304 A